# EUROPÄISCHE PATENTSCHRIFT

(11) **EP 4 064 939 B1**
(45) Veröffentlichungstag und Bekanntmachung des Hinweises auf die Patenterteilung: **09.10.2024**
(21) Anmeldenummer: 20810978.5
(22) Anmeldetag: 25.11.2020
(51) Int. Cl.: A47B 87/00, A47B 87/02, E04G 7/30

(54) **ROHRVERBINDUNGSSTRUKTUR UND MÖBELBAUSATZ**
PIPE CONNECTION STRUCTURE AND FURNITURE KIT
STRUCTURE DE RACCORDEMENT DE TUYAU ET KIT DE MEUBLE

(30) Priorität: 25.11.2019 CH 14872019
(43) Veröffentlichungstag der Anmeldung: 05.10.2022
(73) Patentinhaber: Vitra AG, 4127 Birsfelden (CH)
(72) Erfinder: KELLER, Stefan, 79585 Steinen-Hofen (DE); SCHÜTT, Helmut, 79379 Müllheim-Hügelheim (DE)
(74) Vertreter: Latscha Schöllhorn Partner AG
(86) Internationale Anmeldenummer: PCT/EP2020/083382
(87) Internationale Veröffentlichungsnummer: WO 2021/105221

(56) Entgegenhaltungen:
- JP-A- H09 302 922
- JP-A- H11 152 892
- KR-U- 20180 000 282
- US-A- 2 665 950

## Beschreibung

### Technisches Gebiet

Die Erfindung betrifft eine Rohrverbindungsstruktur gemäss dem Oberbegriff des unabhängigen Anspruchs 1 sowie einen Möbelbausatz mit einer solchen Rohrverbindungsstruktur.

Solche Rohrverbindungsstrukturen mit einem ersten einen Rohrabschnitt aufweisenden Bauteil und einem zweiten einen Rohrabschnitt aufweisenden Bauteil, das einen sich von einem Längsende des Rohrabschnitts erstreckenden Rohrverbinder umfasst, der im Rohrabschnitt des ersten Bauteils anordbar ist, wobei der Rohrabschnitt des ersten Bauteils und der Rohrabschnitt des zweiten Bauteils axial aneinander anliegen, wenn der Rohrverbinder des zweiten Bauteils im Rohrabschnitt des ersten Bauteils angeordnet ist, können zum Aufbauen von Rohrgebilden wie beispielsweise Gerüsten oder Möbeln wie Gestellen und ähnlichem eingesetzt werden.

### Stand der Technik

Zum Verbinden von Rohren oder Rohre aufweisenden Bauteilen ist es bekannt, dass Rohre ineinander gesteckt werden. Dazu ist typischerweise zumindest eines der Rohre mit einem Rohrverbinder ausgestattet, der in das andere Rohr eingeführt werden kann. Oft weist der Rohrverbinder einen kleineren Durchmesser auf als der Rest des Rohres, sodass er in das andere Rohr eingeführt werden kann. Beispielsweise ist es bekannt, einen Endabschnitt des Rohres verjüngt oder im Aussenumfang reduziert auszubilden, sodass er in das andere Rohr eingeführt werden kann. Dabei liegen üblicherweise die Rohre aneinander an, wenn der Rohrverbinder in das andere Rohr eingeführt ist.

Mit solchen Rohren beziehungsweise Rohre aufweisenden Bauteilen, können Rohrkonstruktionen auf einfache Weise variabel aufgebaut, wieder abgebaut oder auch umgebaut werden. Die JP H09 302922 A zeigt ein Beispiel einer herkömmlichen Rohrverbindung.

Wenn Rohrkonstruktionen dazu vorgesehen sein sollen, bestimmten Belastungen widerstehen zu können, kommen gesteckte Rohrverbindungen häufig an ihre Grenzen. Beispielsweise kann es nachteilig sein, dass die Rohre in axialer Richtung nicht verbunden sind, sodass die Handhabung der gesamten Rohrkonstruktion umständlich sein kann. Beispielsweise kann es schwierig sein, die Rohrkonstruktion als Ganzes umzuplatzieren.

Zudem weisen gesteckte Rohrverbindungen der vorstehend beschriebenen Art typischerweise etwas Spiel auf. Das kommt daher, dass die Rohrverbinder einfach in die Rohre einsetzbar sein sollen und deshalb etwas unterdimensioniert sind. Zudem sind werden Rohre aus Effizienzgründen oft mit Fertigungstoleranzen hergestellt, die keine passgenaue Steckverbindung ermöglichen. Entsprechend sind gesteckte Rohrkonstruktionen meistens vergleichsweise instabil beziehungsweise lotterig. Insbesondere wenn die Rohrkonstruktionen verhältnismässig grossen Belastungen ausgesetzt sind, reichen einfache Steckverbindungen zumeist nicht, um genügend Stabilität zu gewährleisten. Beispielsweise im Möbelbau wie beim Aufbauen von Gestellen sind herkömmliche gesteckt verbundene Rohrkonstruktionen zumeist nicht stabil genug oder wären zu teuer in der Herstellung, falls sie für ein passgenaues Stecken präzise genug gefertigt sein sollen.

Der vorliegenden Erfindung liegt daher die Aufgabe zu Grunde, ein System vorzuschlagen, mit dem rohrförmige beziehungsweise Rohrabschnitte aufweisende Bauteile effizient, genau und stabil miteinander verbunden werden können.

### Darstellung der Erfindung

Die Aufgabe wird erfindungsgemäss durch eine Rohrverbindungsstruktur gelöst, wie sie im unabhängigen Anspruch 1 definiert ist, sowie durch einen Möbelbausatz, wie er im unabhängigen Anspruch 14 definiert ist. Vorteilhafte Ausführungsvarianten der Erfindung ergeben sich aus den abhängigen Ansprüchen.

Das Wesen der Erfindung besteht im Folgenden: Eine Rohrverbindungsstruktur umfasst ein erstes Bauteil mit einem Rohrabschnitt und ein zweites Bauteil mit einem Rohrabschnitt sowie mit einem sich von einem Längsende des Rohrabschnitts erstreckenden Rohrverbinder, der im Rohrabschnitt des ersten Bauteils anordbar ist. Der Rohrabschnitt des ersten Bauteils und der Rohrabschnitt des zweiten Bauteils sind so ausgestaltet, dass sie axial aneinander anliegen, wenn der Rohrverbinder des zweiten Bauteils im Rohrabschnitt des ersten Bauteils angeordnet ist. Der Rohrverbinder des zweiten Bauteils ist mit einem betätigbaren Riegelspannmechanismus ausgestattet. Der Riegelspannmechanismus des Rohrverbinders des zweiten Bauteils ist dazu ausgestaltet, den Rohrabschnitt des ersten Bauteils und den Rohrabschnitt des zweiten Bauteils miteinander zu verriegeln und zu verspannen, wenn der Riegelspannmechanismus betätigt wird, während der Rohrverbinder des zweiten Bauteils im Rohrabschnitt des ersten Bauteils angeordnet ist.

Der Begriff "Rohrabschnitt" im Zusammenhang mit der Erfindung bezieht sich auf einen rohrförmigen Teil oder Bereich des Bauteils. Er kann beispielsweise als Rundrohr oder als Mehrkantrohr wie beispielsweise als Vierkantrohr ausgestaltet sein. In seinem Innern ist der Rohrabschnitt hohl, wie dies bei rohrförmigen Strukturen wie Rohren üblich ist.

Die Rohrabschnitte sind typischerweise gerade und längsförmig. Sie können einen im Wesentlichen konstanten Querschnitt quer zu ihren Längsachsen beschreiben. Bei einem Rundrohr ist dieser Querschnitt üblicherweise kreis- oder ringförmig und bei einem Vierkantrohr quadratisch oder rechteckig.

Die Bauteile können aus Metall wie beispielsweise aus Stahl oder Aluminium hergestellt sein. Alternativ dazu können sie auch aus einem Kunststoff oder einem Naturprodukt wie beispielsweise Holz bestehen.

Die Bauteile können einzelne Rohre sein, die vorwiegend aus dem Rohrabschnitt bestehen. In vielen Anwendungen wie beispielsweise im Möbelbau können die Bauteile neben den Rohrabschnitten weitere Elemente beziehungsweise Strukturen aufweisen. Beispielsweise können die Bauteile jeweils leiterartig mit zwei parallelen Vertikalstützen als Rohrabschnitte, die über parallele Sprossen miteinander verbunden sind, ausgestaltet sein. Die ersten und zweiten Bauteile können identisch oder auch verschieden ausgebildet sein.

Der Rohrverbinder kann in seinen äusseren Abmessungen so ausgebildet sein, dass er in den Rohrabschnitt des ersten Bauteils eingeführt werden kann. So kann das erste Bauteil quasi auf das zweite Bauteil aufgesteckt werden.

Der Riegelspannmechanismus kann als Mechanik im Rohrverbinder implementiert sein. Dazu kann er, wie weiter unten in einer bevorzugten Ausführungsform genauer ausgeführt ist, bewegliche Teile und statische Teile umfassen. Er kann auch als Ganzes den Rohrverbinder darstellen.

Bei vergleichsweise grossen Bauteilen mit mehreren Rohrabschnitten kann das zweite Bauteil mehrere Riegelspannmechanismen aufweisen. Insbesondere kann pro Rohrverbinder ein Riegelspannmechanismus vorgesehen sein.

Als Verriegeln im Sinne der Erfindung kann eine formschlüssige Verbindung zwischen den beiden Rohrabschnitten des ersten und zweiten Bauteils verstanden werden. Dabei kann insbesondere ein Formschluss so vorliegen, dass in axialer Richtung ein Element des Riegelspannmechanismus dem Rohrabschnitt des ersten Bauteils im Weg steht und somit ein Entfernen des Rohrabschnitts des ersten Bauteils vom Rohrabschnitt des zweiten Bauteils verhindert.

Als Verspannen im Sinne der Erfindung wird eine Verbindung unter Druck oder Zug verstanden, die den Rohrabschnitt des ersten Bauteils und den Rohrabschnitt des zweiten Bauteils so aneinander presst beziehungsweise spannt, dass sie im Wesentlichen kein Spiel zueinander aufweisen. Mit einer verspannten Verbindung können die Rohrabschnitte quasi als ein Stück gehandhabt werden.

Durch das Vorsehen des Riegelspannmechanismus können die beiden Bauteile auf äusserst robuste und sichere Weise miteinander verbunden werden. Insbesondere kann durch das Verriegeln die Verbindung zwischen den beiden Rohrabschnitten gesichert und quasi unlösbar vorgesehen werden. Durch das Verspannen kann zusätzlich die Verbindung der beiden Rohrabschnitte dergestalt sein, dass sie quasi einteilig gehandhabt werden können. Ein Wackeln oder Lottern der Rohrabschnitte zueinander im verriegelten Zustand der Rohrabschnitte zueinander wird dadurch reduziert oder ganz unterbunden. Die erfindungsgemässe Rohrverbindungsstruktur ermöglicht es also, rohrförmige beziehungsweise Rohrabschnitte aufweisende Bauteile effizient, genau und stabil miteinander zu verbinden.

Vorzugsweise ist der Rohrabschnitt des ersten Bauteils mit einer Nasenöffnung ausgestattet, der Riegelspannmechanismus des Rohrverbinders weist eine Nase auf und der Riegelspannmechanismus des Rohrverbinders des zweiten Bauteils ist so ausgestaltet, dass die Nase in die Nasenöffnung des Rohrabschnitts des ersten Bauteils bewegt wird und den Rohrabschnitt des ersten Bauteils mit dem Rohrabschnitt des zweiten Bauteils verriegelt, wenn der Riegelspannmechanismus des Rohrverbinders des zweiten Bauteils betätigt wird, während der Rohrverbinder des zweiten Bauteils im Rohrabschnitt des ersten Bauteils angeordnet ist.

Die Nasenöffnung im Rohrabschnitt des ersten Bauteils kann als Bohrung in der Rohrwandung realisiert sein. Indem die Nase in die Nasenöffnung hinein bewegt wird und da stehen bleibt, während die beiden Rohrabschnitte verriegelt sind, kann auf effiziente ein Formschluss beziehungsweise eine formschlussartige Verbindung erzeugt werden. Dadurch können die beiden Rohrabschnitt sicher zueinander versperrt und verriegelt sein.

Vorzugsweise ist der Riegelspannmechanismus des Rohrverbinders des zweiten Bauteils so ausgestaltet, dass die Nase an einen Rand der Nasenöffnung des Rohrabschnitts des ersten Bauteils gedrückt wird und den Rohrabschnitt des ersten Bauteils mit dem Rohrabschnitt des zweiten Bauteils verspannt, wenn der Riegelspannmechanismus des Rohrverbinders des zweiten Bauteils betätigt wird, während der Rohrverbinder des zweiten Bauteils im Rohrabschnitt des ersten Bauteils angeordnet ist.

Insbesondere kann auf diese Weise die Nase den Rohrabschnitt des zweiten Bauteils axial gegen den Rohrabschnitt des ersten Bauteils drücken, sodass die beiden Rohrabschnitte gegeneinander verspannt sind. Dies ermöglicht, dass die beiden Rohrabschnitte beziehungsweise die beiden Bauteile so miteinander verbunden sind, dass sie quasi als ein einziges Teil gehandhabt werden können. Zudem können die beiden Bauteile so eine sehr hohe Stabilität gewährleisten.

Vorzugsweise ist dabei der Riegelspannmechanismus des Rohrverbinders des zweiten Bauteils so ausgestaltet, dass bei Betätigung des Riegelspannmechanismus, während der Rohrverbinder des zweiten Bauteils im Rohrabschnitt des ersten Bauteils angeordnet ist, zuerst zum Verriegeln des Rohrabschnitts des ersten Bauteils mit dem Rohrabschnitt des zweiten Bauteils die Nase in die Nasenöffnung des Rohrabschnitts des ersten Bauteils bewegt wird und nachfolgend zum Verspannen des Rohrabschnitts des ersten Bauteils mit dem Rohrabschnitt des zweiten Bauteils die Nase des Riegelspannmechanismus des Rohrverbinders des zweiten Bauteils an den Rand der Nasenöffnung des Rohrabschnitts des ersten Bauteils gedrückt wird. Auf diese Weise können die beiden Funktionen des Riegelspannmechanismus bei dessen Betätigung zeitlich getrennt beziehungsweise auch teilweise zeitlich überlappend nacheinander ausgeführt werden, was ein sehr angepasstes Verriegeln und Verspannen ermöglichen. Insbesondere kann beim Verspannen die Verriegelung bestehen bleiben.

Vorzugsweise ist der Riegelspannmechanismus des Rohrverbinders des zweiten Bauteils so ausgestaltet, dass zum Verriegeln des Rohrabschnitts des ersten Bauteils mit dem Rohrabschnitt des zweiten Bauteils die Nase quasi radial bewegbar ist. Der Begriff "radial" kann sich in diesem Zusammenhang auf den zugehörigen Rohrabschnitt beziehen. Bei einem kreisförmigen Rohrquerschnitt kann radial also im engeren Sinne entlang des Radius beziehungsweise in Radiusrichtung sein. Bei anderen Querschnitten kann sich radial auf von der Achse des zugehörigen Rohrabschnitts weg beziehen. Dabei kann die radiale Bewegung eine Bewegung rechtwinklig zur Längsachse des Rohrabschnitts sein. Der Begriff "radial bewegbar" Bezieht sich in diesem Zusammenhang nicht auf eine ausschliesslich radiale Bewegung, sondern kann insbesondere auch eine gemischt axiale und radial Bewegung umfassen. Es reicht also auch, wenn die Bewegung der Nase eine radiale Komponente umfasst.

Durch die radiale Bewegung der Nase kann diese auf einfache und effiziente Weise in die Nasenöffnung bewegt werden. Insbesondere ermöglicht dies auch eine einfache Ausgestaltung der Nasenöffnung beispielsweise als Bohrung in der Rohrwandung.

Dabei umfasst der Riegelspannmechanismus des Rohrverbinders des zweiten Bauteils vorzugsweise eine ortsfest mit dem Rohrabschnitt des zweiten Bauteils verbundene Basis und ein an der Basis schwenkbar gelagertes Stellglied, an dem die Nase ausgebildet ist. Auf diese Weise kann die Nase effizient nach aussen geschwenkt werden, sodass sie eine radiale Bewegung wahrnimmt.

Vorzugsweise ist der Riegelspannmechanismus des Rohrverbinders des zweiten Bauteils so ausgestaltet ist, dass zum Verspannen des Rohrabschnitts des ersten Bauteils mit dem Rohrabschnitt des zweiten Bauteils die Nase quasi axial bewegbar ist. Auf diese Weise kann die Nase effizient gegen den Rand der Nasenöffnung gedrückt werden, was die beiden Rohrabschnitte effizient miteinander verspannt.

Das Stellglied des Riegelspannmechanismus des Rohrverbinders des zweiten Bauteils ist vorzugsweise axial bewegbar an der Basis des Rohrverbinders des zweiten Bauteils gelagert. Auf diese Weise kann das Stellglied sowohl die radiale als auch die axiale Bewegung der Nase induzieren. Insbesondere kann das Stellglied eine gemischte Bewegung der Nase auslösen, die eine radiale und eine axiale Komponente umfasst.

Dabei weist das Stellglied des Riegelspannmechanismus des Rohrverbinders des zweiten Bauteils vorzugsweise eine längsförmige Bolzenaufnahme auf und die Basis des Rohrverbinders des zweiten Bauteils vorzugsweise einen Bolzen, der in die Bolzenaufnahme hineinragt. Zum Schwenken des Stellglieds kann diese um den Bolzen gedreht werden. Bolzen und Bolzenaufnahme bilden so ein Gelenk. Gleichzeitig ermöglicht die längliche Form der Bolzenaufnahme, dass das Stellglied auch axial bewegt wird. So kann eine gemischte Bewegung erzeugt werden, die bei der Nase eine radiale und eine axiale Bewegung induziert.

Vorzugsweise umfasst der Riegelspannmechanismus des Rohrverbinders des zweiten Bauteils eine Betätigungsschraube, die so an die Nase des Riegelspannmechanismus des Rohrverbinders des zweiten Bauteils gekoppelt ist, dass sich die Nase bei einem Drehen der Betätigungsschraube bewegt. Eine solche Betätigungsschraube kann ein effizientes Betätigen und insbesondere ein ausreichend kräftiges Verspannen der Rohrabschnitte ermöglichen.

Dabei weist das Stellglied des Riegelspannmechanismus des Rohrverbinders des zweiten Bauteils vorzugsweise eine durchgehende Schraubenaufnahme auf, in die die Betätigungsschraube eingedreht ist. Auf diese Weise kann die Schraube direkt am Stellglied angreifen und auf dieses wirken. Dies ermöglicht eine effiziente Übersetzung der Bewegung der Schraube auf die Nase.

Der Rohrabschnitt des ersten Bauteils ist vorzugsweise mit einer Betätigungsöffnung ausgestattet, durch die ein Schraubendreher so einführbar ist, dass er in die Betätigungsschraube greift, wenn der Rohrverbinder des zweiten Bauteils im Rohrabschnitt des ersten Bauteils angeordnet ist. Die Betätigungsöffnung kann als eine Bohrung in der Rohrwandung des Rohrabschnitts des ersten Bauteils vorgesehen sein. Beispielsweise kann die Betätigungsöffnung benachbart zur Nasenöffnung liegen.

Vorzugsweise umfasst der Riegelspannmechanismus des Rohrverbinders des zweiten Bauteils ein Federelement, das den Riegelspannmechanismus in eine Ausgangsstellung bewegt, wenn der Riegelspannmechanismus nicht betätigt wird. In der Ausgangsstellung sind der Rohrabschnitt des ersten Bauteils und der Rohrabschnitt des zweiten Bauteils nicht miteinander verriegelt und verspannt, auch wenn der Rohrverbinder des zweiten Bauteils im Rohrabschnitt des ersten Bauteils angeordnet ist. Das Federelement kann eine Spiralfeder, ein elastisches Element oder eine beliebige andere Struktur sein, die den Riegelspannmechanismus in die Ausgangsstellung bewegen kann. Mit einem solchen Federelement kann der Riegelspannmechanismus effizient wieder gelöst und die Bauteile wieder voneinander entfernt werden. Beispielsweise kann das Federelement am Stellglied ansetzen beziehungsweise auf dieses wirken.

Die Rohrverbindungsstruktur gemäss der Erfindung und ihre bevorzugten Ausführungsvarianten können in unterschiedlichen Anwendungen beziehungsweise Vorrichtungen implementiert sein. Beispielsweise kann die Rohrverbindungsstruktur im Gerüstbau eingesetzt werden.

Ein anderer Aspekt der Erfindung betrifft einen Möbelbausatz. Der Möbelbausatz umfasst einen Satz Bodenleitern und einen Satz Aufbauleitern.

Der Begriff "Möbel" im Zusammenhang mit der Erfindung bezieht sich auf Einrichtungsgegenstände vorwiegend in Innenräumen wie Wohnungen, Geschäften, Büroräumen oder anderen Nutzungseinheiten. Typischerweise sind Möble beweglich und stehen somit im Gegensatz zu unbeweglichen Gegenständen (Immobilien), die mit dem Boden oder baulichen Anlagen fest verbunden sind. In den meisten Fällen haben Möbel einen vorbestimmten Zweck und sind für eine bestimmte Nutzung vorgesehen. Typische Möbel können Tische, Stühle, Regale, Ablagen und dergleichen sein.

Der Begriff "Satz" bezieht sich in diesem Zusammenhang auf eine Mehrzahl von Elementen beziehungsweise Bauteilen. So umfasst beispielsweise der Satz Bodenleitern zwei oder mehr Bodenleitern.

Die Bodenleitern umfassen jeweils zwei über eine obere Sprosse und eine untere Sprosse miteinander verbundene Vertikalstützen, wobei die zwei Vertikalstützen jeweils mit einem Fuss zum Aufstellen auf einen Boden ausgestattet sind. Die Aufbauleitern weisen jeweils zwei über eine obere Sprosse und eine untere Sprosse miteinander verbundene Vertikalstützen auf, wobei die Vertikalstützen dazu ausgebildet sind, auf die Vertikalstützen einer anderen der Aufbauleitern oder die Vertikalstützen einer der Bodenleitern aufgesteckt zu werden. Insbesondere sind die einen der Boden- und Aufbauleitern jeweils als erste Bauteile einer Rohrverbindungsstruktur wie oben beschrieben und die anderen der Boden- und Aufbauleitern als zweite Bauteile der Rohrverbindungsstruktur ausgebildet.

Der Möbelbausatz kann dazu vorgesehen sein, dass nach Bedarf flexibel unterschiedliche Möbel aus den gleichen Bauteilen aufgebaut werden können. Dabei können solche Möbel beispielsweise Regale, Gestelle oder Tische sein. Insbesondere können die Möbel Büromöbel sein.

Die Bodenleitern können neben der oberen und der unteren Sprosse auch noch weitere Sprossen umfassen. Typischerweise sind die Vertikalstützen und die Sprossen im Wesentlichen stangenförmig ausgebildet. Die Sprossen und die Vertikalstützen können einen im Wesentlichen runden beziehungsweise kreisförmigen Querschnitt aufweisen. Die Vertikalstützen und die Sprossen einer Bodenleiter können jeweils quasi rechtwinklig zueinander stehen, sodass die Sprossen parallel zueinander und die Vertikalstützen parallel zueinander verlaufen.

Die Vertikalstützen der Bodenleitern können über weite Strecken als Stangenabschnitte wie beispielsweise runde oder mehrkantige Rohre ausgebildet sein. Sie sind typischerweise aus einem robusten Material wie einem Metal hergestellt. Die Vertikalstützen einer Bodenleiter verlaufen vorteilhafterweise parallel zueinander.

Die Sprossen der Bodenleitern können ebenfalls über weite Strecken als Stangenprofile beziehungsweise Rohre ausgebildet sein. Vorteilhafterweise weisen sie einen Umfang mit einem quasi kreisförmigen Querschnitt auf. Die obere und die untere Sprosse sind im Betrieb vorteilhafterweise horizontal ausgerichtet und verlaufen parallel zueinander.

Die Füsse der Bodenleitern können beispielsweise als Gleiter ausgebildet sein. Fall ein häufiges Verschieben des aus dem Möbelbausatz erstellten Möbels beabsichtigt ist, können auch Rollen als Füsse der Bodenleitern eingesetzt werden.

Indem die Boden- und Aufbauleitern als erste beziehungsweise zweite Bauteile der erfindungsgemässen Rohrverbindungsstruktur ausgebildet sind, können sie effizient und sicher miteinander verbunden werden. Dabei können insbesondere die vorstehend im Zusammenhang mit der erfindungsgemässen Rohrverbindungsstruktur beschriebenen Effekte und Vorteile zum Aufbau, Umbau und Abbau eines Möbels genutzt werden. So ermöglicht der erfindungsgemässe Möbelbausatz, dass auf äusserst vielseitige und flexible Weise Möbel zusammengebaut werden können. Insbesondere bei sich ändernden Gegebenheiten, wie dies bei Verkaufsflächen oder bei Büroarbeitsplätzen regelmässig vorkommen kann, kann dies vorteilhaft sein.

Vorzugsweise umfasst der Möbelbausatz einen Satz längsförmiger Traversen, die jeweils an ihren Längsenden mit einer Einrastklaue ausgestattet sind, die dazu ausgebildet ist, werkzeuglos an einer der Sprossen einer der Bodenleitern montiert zu werden, und einen Satz längsförmiger Windverbände, die jeweils an ihren Längsenden mit einer Schelle ausgestattet sind, die dazu ausgebildet ist, an einer der Sprossen einer der Bodenleitern montiert zu werden, indem sie die eine der Sprossen umgreift, wobei die Traversen und die Windverbände so ausgebildet sind, dass eine der Traversen an der oberen Sprosse einer ersten der Bodenleitern und an der oberen Sprosse einer zweiten der Bodenleitern montierbar ist, während einer der Windverbände an der oberen der ersten der Bodenleitern und der unteren der zweiten der Bodenleitern montiert ist.

Mittels solchen Traversen und Windverbänden kann die Stabilität und Funktionalität der mittels des Möbelbausatzes aufgebauten Möbel gewährleistet werden, ohne dass bezüglich Flexibilität wesentliche Einschränkungen gemacht werden müssen.

### Kurze Beschreibung der Zeichnungen

Weitere vorteilhafte Ausgestaltungen der Erfindung ergeben sich aus der nachfolgenden Beschreibung von Ausführungsbeispielen der Erfindung mithilfe der schematischen Zeichnung. Insbesondere werden im Folgenden die erfindungsgemässe Rohrverbindungsstruktur und der erfindungsgemässe Möbelbausatz unter Bezugnahme auf die beigefügten Zeichnungen anhand von Ausführungsbeispielen detaillierter beschrieben. Es zeigen:
- Fig. 1: eine Ansicht von vorne an eine Bodenleiter eines Ausführungsbeispiels eines erfindungsgemässen Möbelbausatzes, in dem ein Ausführungsbeispiel einer erfindungsgemässen Rohrverbindungsstruktur implementiert ist;
- Fig. 2: eine Ansicht von vorne an eine Aufbauleiter des Möbelbausatzes von Fig. 1 mit einem Rohrverbinder der Rohrverbindungsstruktur von Fig. 1;
- Fig. 3: eine Ansicht von oben auf eine Traverse des Möbelbausatzes von Fig. 1;
- Fig. 4: eine Ansicht von der Seite an eine Einrastklaue der Traverse von Fig. 3;
- Fig. 5: eine Ansicht von vorne an einen Windverband des Möbelbausatzes von Fig. 1;
- Fig. 6: eine Ansicht von oben auf den Windverband von Fig. 5;
- Fig. 7: eine perspektivische Ansicht einer Schelle des Windverbands von Fig. 5;
- Fig. 8: eine perspektivische Ansicht einer aus dem Möbelbausatz von Fig. 1 aufgebauten Gestellkonstruktion;
- Fig. 9: eine Querschnittsansicht der Rohrverbindungsstruktur des Möbelbausatzes von Fig. 1, wie sie in der Gestellkonstruktion von Fig. 8 implementiert ist, in einem gelösten Zustand;
- Fig. 10: eine Querschnittsansicht der Rohrverbindungsstruktur von Fig. 9 in einem verriegelten Zustand; und
- Fig. 11: eine Querschnittsansicht der Rohrverbindungsstruktur von Fig. 9 in einem verriegelten und verspannten Zustand.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Fig. und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Fig. lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Fig. stehen für ähnliche oder gleiche Elemente.

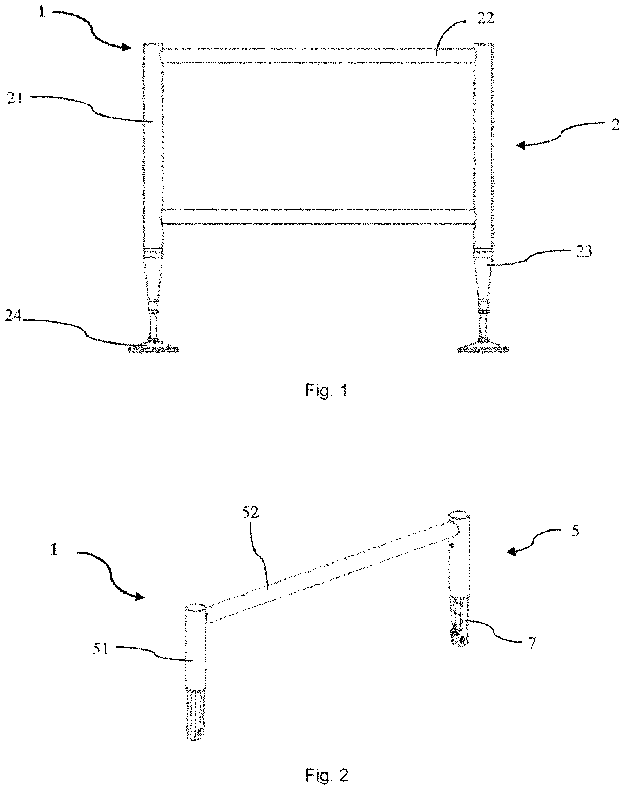

Fig. 1 zeigt eine Bodenleiter 2 eines Satzes Bodenleitern 2 eines Ausführungsbeispiels eines erfindungsgemässen Möbelbausatzes 1. Die Bodenleiter 2 ist als erstes Bauteil eines Ausführungsbeispiels einer erfindungsgemässen Rohrverbindungsstruktur ausgebildet. Sie besteht aus zwei parallelen Vertikalstützen 21, die durch zwei horizontale Sprossen 22 miteinander verbunden sind. Die Sprossen 22 sind als gerade Rohre mit einem kreisförmigen Querschnitt ausgebildet. Sie stehen in einem rechten Winkel zu den Vertikalstützen 21 und sind mit diesen fest verbunden wie beispielsweise verschweisst. Die Vertikalstützen 21 sind ebenfalls grösstenteils als gerade Rohre mit kreisförmigem Querschnitt ausgebildet und gehen nach unten jeweils in einen sich verjüngenden Fuss 23 über. Die beiden Füsse 23 sind jeweils mit einem Gleiter 24 ausgestattet, der zum Aufstellen der Bodenleiter 2 auf dem Boden angeordnet wird.

In Fig. 2 ist eine einsprossige Aufbauleiter 5 eines Satzes Aufbauleitern 5 des Möbelbausatzes 1 gezeigt. Die Aufbauleiter 5 ist als zweites Bauteil eines Ausführungsbeispiels einer erfindungsgemässen Rohrverbindungsstruktur ausgebildet. Sie umfasst zwei rohrförmige Vertikalstützen 51, die über eine rohrförmige Sprosse 52 fest miteinander verbunden sind. Zusammen sind die Vertikalstützen 51 und die Sprosse 52 quasi U-förmig. Die Sprossen 52 der Aufbauleiter sind gleich dimensioniert wie die Sprossen 22 der Bodenleiter 2 von Fig. 1, sodass die Aufbauleiter 5 zur Bodenleiter 2 passt.

Von den unteren Enden der Vertikalstützen 51 der Aufbauleiter 5 erstreckt sich jeweils ein Rohrverbinder 7 der Rohrverbindungsstruktur vertikal nach unten. Die Rohrerbinder 7 sind so ausgestaltet, dass sie in die Vertikalstützen 21 der Bodenleiter 2 oder in Vertikalstützen 51 einer weiteren Aufbauleiter 5 eingeführt werden können und durch Betätigung die verbundenen Vertikalstützen 21, 51 aneinander fixiert.

Neben der Aufbauleiter 5, wie sie in Fig. 2 gezeigt ist, umfasst der Satz Aufbauleitern 5 des Möbelbausatzes 1 weitere Aufbauleitern mit über zwei parallele Sprossen verbundenen Vertikalstützen. Im Vergleich zur einsprossigen Ausführungsform von Fig. 2 sind diese Aufbauleitern länger beziehungsweise höher ausgebildet.

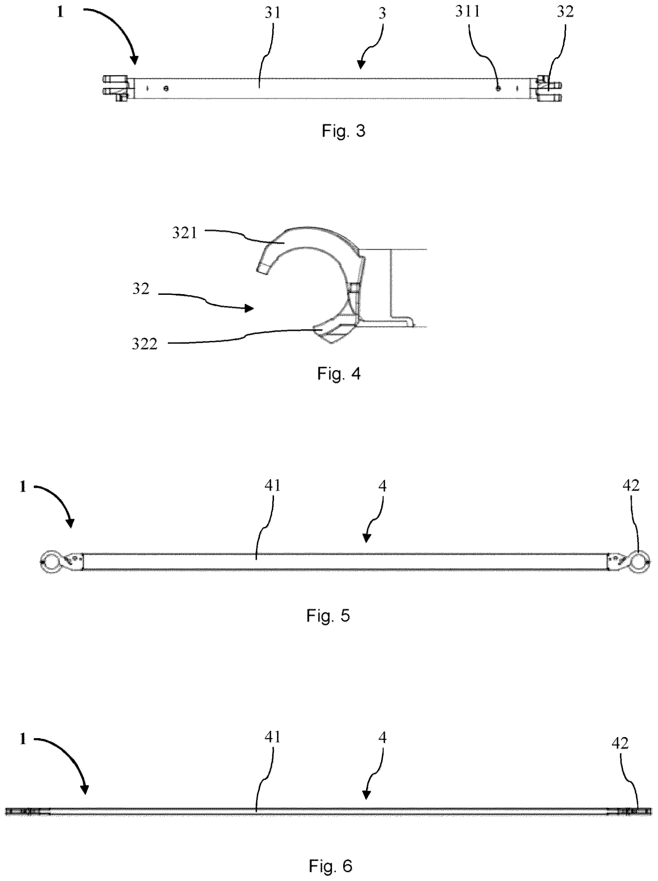

Fig. 3 zeigt eine Traverse 3 eines Satzes von Traversen 3 des Möbelbausatzes 1. Die Traverse 3 ist aus einem längsförmigen Stangenabschnitt 31 und sich jeweils von den Längsenden des Stangenabschnitts links beziehungsweise rechts nach aussen erstreckenden Einrastklauen 32 gebildet. Der Stangenabschnitt 31 ist aus einem Rohr mit einem kreisförmigen Durchmesser geformt, der dem Durchmesser der Sprosse 52 der Aufbauleiter 5 und der Sprossen 22 der Bodenleiter 2 entspricht. Auf seiner Oberseite ist der Stangenabschnitt 31 nahe seiner Längenden jeweils mit einer Bohrung 311 als weibliches Steckteil ausgestattet.

In Fig. 4 ist die linke der beiden Einrastklauen 32 der Traverse 3 von Fig. 3 vergrössert dargestellt. Dabei ist ersichtlich, dass die Einrastklaue 32 eine obere entsprechend zu den Sprossen 22, 52 der Boden- und Aufbauleitern 2, 5 geformte Sprossenaufnahme 321 aufweist und einen unteren Schieber 322. Die Einrastklaue 32 ist mit einer Feder ausgestattet, die den Schieber 322 in die in Fig. 4 gezeigte Position nach links drückt. In dieser Position ist die Einrastklaue 32 an einer Sprosse 22, 52 oder einem Stangenabschnitt 31 einer anderen Traverse 3 eingerastet, wenn die Sprossenaufnahme 321 diese(n) aufnimmt. Die Traverse 3 ist dann an der Sprosse 22, 52 beziehungsweise dem Stangenabschnitt 31 montiert.

Zum Lösen der Einrastklaue 32 wird der Schieber 322 beispielsweise manuell entgegen der Federkraft nach rechts gedrückt. Dadurch wird die Einrastklaue 32 geöffnet und die Traverse 3 kann entfernt werden. Zum Montieren der Traverse 3 an einer Sprosse 22, 52 beziehungsweise an einem Stangenabschnitt 31 einer anderen Traverse 3 wird die Einrastklaue 32 von oben her auf die Sprosse 22, 52 oder den Stangenabschnitt 31 gedrückt. Durch die als Betätigungsfläche ausgestaltete, abgeschrägte Unterseite des Schiebers 322 wird dieser dabei nach rechts gedrückt, sodass die Sprossenaufnahme 321 die Sprosse 22, 52 beziehungsweise den Stangenabschnitt 31 aufnehmen kann. Getrieben von der Feder schnappt der Schieber 322 dann unterhalb der Sprosse 22, 52 beziehungsweise des Stangenabschnitts 31 wieder ein, sodass eine sichere Befestigung erreicht wird.

In Fig. 5 ist ein Windverband 4 eines Satzes von Windverbänden 4 des Möbelbausatzes 1 gezeigt. Der Windverband 4 weist einen Stangenabschnitt 41 auf, der an seinen Längsenden jeweils in eine Schelle 42 übergeht. Wie zusammen mit der Fig. 6 ersichtlich ist, ist der Stangenabschnitt 41 als massive Vierkantstange mit einem rechteckigen Querschnitt ausgeführt. Durch die massive Ausführung kann der Windverband besonders robust und zur Aufnahme vergleichsweise grosser Kräfte ausgebildet sein.

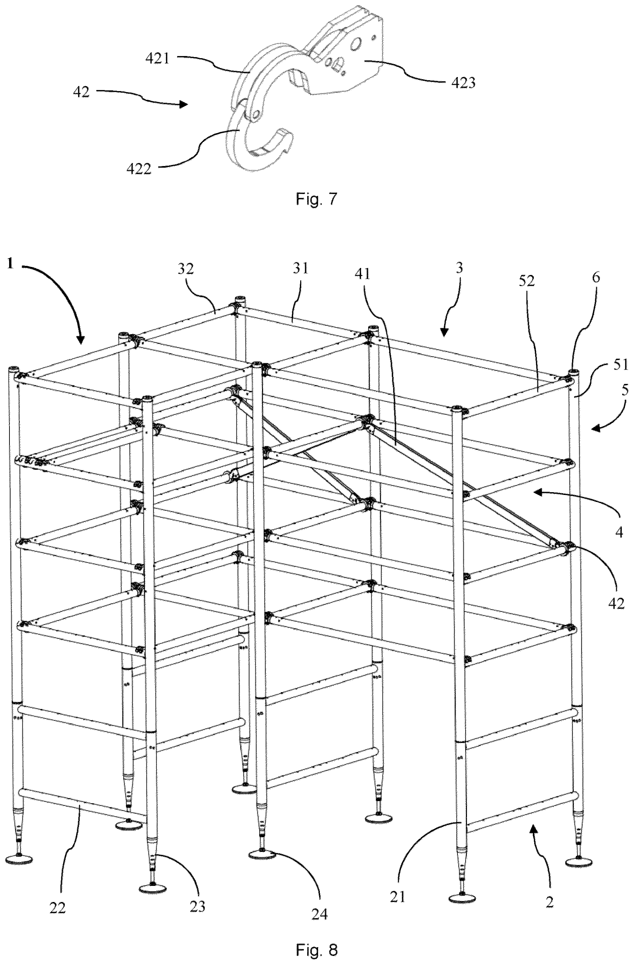

Fig. 7 zeigt eine der Schellen 42 des Windverbands 4 in einer geöffneten Stellung. Die Schelle 42 ist handschellenartig mit einer Basis 423, einem oberen Umgreifteil 421 und einem unteren Umgreifteil 422 ausgestattet. Das untere Umgreifteil 422 ist über ein Scharniergelenk schwenkbar am oberen Umgreifteil 421 montiert. In der Basis 423 ist eine Verriegelung angeordnet, die den unteren Umgreifteil 422 fixiert, wenn die Schelle 42 so geschlossen ist, dass sie eine Sprosse 22, 52 umgreift. Insbesondere ist der untere Umgreifteil 422 mit einer Rastnase ausgestattet, der hinter einen gefederten Riegel der Verriegelung greift. Die Sprosse 22, 52 ist so fest gehalten und ein Lösen der Schnalle 42 ohne Betätigung der Verriegelung kann vermieden werden.

In Fig. 8 ist eine aus dem Möbelbausatz 1 aufgebaute Gestellkonstruktion als dreidimensionale tragende Rohrstruktur gezeigt. Dabei umfasst die Gestellkonstruktion vier Leitern, die jeweils aus einer Bodenleiter 2 und zwei vertikal darauf aufgesteckten Aufbauleitern 5 mit jeweils zwei Sprossen 52 gebildet sind. Die Sprossen 52 der Aufbauleitern 5, welche auf gleicher Höhe liegen, sind jeweils über zwei Traversen 3 miteinander verbunden. Dazu sind die Einrastklauen 32 der Traversen 3 anliegend an die Vertikalstützen 51 der Aufbauleitern 5 an den Sprossen 52 montiert. Gleichzeitig sind mehrere Windverbände 4 diagonal beziehungsweise schräg mit Sprossen 52 auf zwei unterschiedlichen Höhen verbunden.

Durch das Vorsehen der Traversen 3 zusammen mit den Windverbänden 4 an den Leitern ist die Gestellkonstruktion äusserst robust und steif. Insbesondere kann sie auf diese Weise vergleichsweise grosse Lasten aufnehmen. Die oberen Enden der Rohrabschnitte 51 der obersten Aufbauleitern 5 sind mit Deckeln 6 abgedeckt und verschlossen.

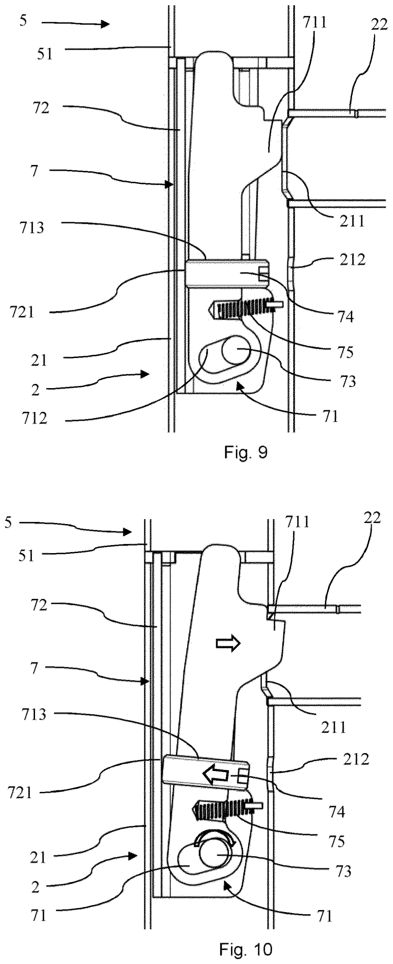

Fig. 9 zeigt im Querschnitt eine Detailansicht der erfindungsgemässen Rohrverbindungsstruktur in einem gelösten Zustand beziehungsweise Ausgangszustand, in dem der Rohrverbinder 7 frei in einen Rohrabschnitt eines ersten Bauteils wie vorliegend in eine der Vertikalstützen 21 der Bodenleiter 2 axial eingesteckt und axial wieder davon entfernt werden kann. Die Bodenleiter 2 und die Aufbauleiter 5 sind so lose miteinander verbunden.

Der Rohrverbinder 7 umfasst eine ortsfest mit der Vertikalstütze 51 der Aufbauleiter 5 verbundene, längsförmige Basis 72 und ein daran in einem gewissen Umfang und auf definierte Weise bewegliches Stellglied 71. Das Stellglied 71 verläuft entlang der Basis 72 und weist nahe seinem oberen Ende eine sich radial nach rechts erstreckende Nase 711, nahe seinem unteren Ende eine quasi ovale Bolzenaufnahme 712 und zwischen Nase 711 und Bolzenaufnahme 712 eine durchgehende Schraubenaufnahme 713 auf. Die Nase 711 bildet eine im gelösten Zustand horizontale obere Anschlagfläche.

Das Stellglied 71 ist an der Basis 72 montiert, indem sich ein zylindrischer Bolzen 73, der ortsfest mit der Basis verbunden ist, durch die Bolzenaufnahme 712 des Stellglieds 71 hindurch erstreckt. Im gelösten Zustand liegt der Bolzen 73 an einem rechten Ende der Bolzenaufnahme 712 an. In der Schraubenaufnahme 713 ist eine Betätigungsschraube 74 angeordnet, die einen Kopf mit einem weiblichen Innensechskant aufweist. Die Schraubenaufnahme 713 ist mit einem Innengewinde ausgestattet, das zu einem Aussengewinde der Betätigungsschraube 74 korrespondiert.

Auf einer Höhe zwischen Bolzen 73 und Betätigungsschraube 74 ist eine Druckfeder 75 angeordnet. Die Druckfeder 75 ist so an der Basis 72 und am Stellglied 71 befestigt, dass sie das Stellglied 71 in den gelösten Zustand drückt. Auf diese Weise wird gewährleistet, dass sich die Rohrverbindungsstruktur ohne Betätigung zuverlässig im gelösten Zustand beziehungsweise im Ausgangzustand befindet.

Wie in der Fig. 9 ersichtlich ist, ist der an der Vertikalstütze 51 der Aufbauleiter befestigte Rohrverbinder 7 in die Vertikalstütze 21 der Bodenleiter 2 eingeführt. Die Vertikalstütze 21 der Bodenleiter 2 ist mit einer oberen länglichen Nasenöffnung 211 und einer unteren, als kreisförmige Bohrung ausgebildeten Betätigungsöffnung 212 ausgestattet. Die Nasenöffnung 211 ist von der Sprosse 22 der Bodenleiter 2 eingefasst, sodass sie von aussen her nicht sichtbar ist. Die Nase 711 liegt auf der Höhe der und benachbart zur Nasenöffnung 211. Die Betätigungsschraube 74 liegt auf der Höhe der Betätigungsöffnung 212, sodass sie einem Sechskantschraubendreher durch die Betätigungsöffnung 212 hindurch zugänglich ist.

In Fig. 10 ist die Rohrverbindungsstruktur während ihrer Betätigung gezeigt. Dazu wird die Betätigungsschraube 74 mittels des Sechskantschraubendrehers (in Fig. 10 nicht dargestellt) in die Schraubenaufnahme 713 des Stellglieds 71 eingedreht. Wie durch den Pfeil auf der Betätigungsschraube 74 in Fig. 10 angedeutet ist, wird dadurch die Betätigungsschraube 74 quasi nach links durch die Schraubenaufnahme 713 hindurch bewegt. Dabei drückt sie gegen eine vertikale Anschlagfläche 721 der Basis 72 und drückt das Stellglied 71 von der Anschlagfläche 721 weg. Dadurch wird das Stellglied 71 relativ zur Basis 72 im Uhrzeigersinn um den Bolzen 73 herum gedreht. Die Feder 75 drückt den unteren Teil des Stellglieds 71 nach links, sodass der Bolzen 73 weiterhin am rechten Ende der Bolzenaufnahme 712 anliegt.

Durch das Drehen des Stellglieds 71 im Uhrzeigersinn um den Bolzen 73 wird die Nase 711 quasi radial nach rechts bewegt. Dabei wird die Nase 711 in die Nasenöffnung 211 hinein bewegt, sodass die Aufbauleiter 5 und die Bodenleiter 2 zueinander verriegelt sind. Insbesondere versperrt die Nase 711 eine axiale Bewegung der Vertikalstütze 21 der Bodenleiter 2 und der Vertikalstütze 51 der Aufbauleiter 5 zueinander, sodass ein Formschluss zwischen den beiden Vertikalstützen 21, 51 vorliegt. Die Rohrverbindungsstruktur befindet sich in der Fig. 10 in einem verriegelten Zustand, in dem ein Lösen der Vertikalstützen 21, 51 voneinander nicht möglich ist aber in einem gewissen Umfang noch ein Spiel zwischen den beiden Vertikalstützen 21, 51 vorhanden ist. Insbesondere ist in einem begrenzten Umfang noch eine axiale Bewegung zwischen den beiden Vertikalstützen 21, 51 möglich.

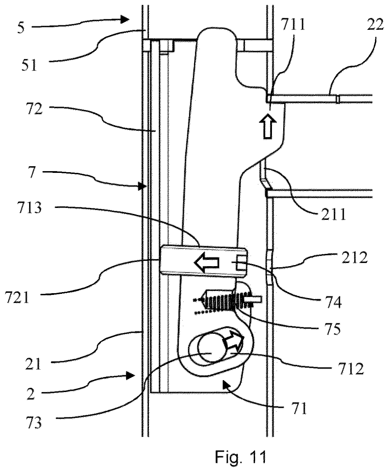

Fig. 11 zeigt die Rohrverbindungsstruktur nach ihrer Betätigung in einem verriegelten und verspannten Zustand beziehungsweise in einem Endzustand. Dabei ist ersichtlich, dass ausgehende vom verriegelten Zustand von Fig. 10 die Betätigungsschraube 74 mittels des Sechskantschraubendrehers (in Fig. 11 nicht dargestellt) weiter in die Schraubenaufnahme 713 des Stellglieds 71 eingedreht und damit nach links bewegt wird. Dabei drückt sie weiter gegen die vertikale Anschlagfläche 721 der Basis 72 und drückt das Stellglied 71 von der Anschlagfläche 721 weg. Insbesondere wird das Stellglied 71 dadurch entgegen der Federkraft der Druckfeder 75 entlang der Bolzenaufnahme 712 bewegt, sodass die Bolzenaufnahme 712 relativ zum Bolzen 73 nach rechts verschoben wird. Da die Bolzenaufnahme 712 in seiner Längsausdehnung geneigt beziehungsweise schräg ausgebildet ist, wird das Stellglied 71 relativ zur Basis 72 axial nach oben in Richtung der Vertikalstütze 51 der Aufbauleiter 5 bewegt.

Wie in Fig. 11 durch den auf der Nase 711 des Stellglieds 71 dargestellten Pfeil angedeutet ist, wird bei dieser Bewegung des Stellglieds 71 die Nase 711 quasi axial nach oben bewegt, bis sie am oberen Rand der Nasenöffnung 211 der Vertikalstütze 21 der Bodenleiter 2 anschlägt und an diesen andrückt. Dadurch wird die Vertikalstütze 21 der Bodenleiter 2 an das Vertikalstütze 51 der Aufbauleiter 5 gepresst und die beiden Vertikalstützen 21, 51 sind zueinander verspannt. Insbesondere ist dabei kein Spiel mehr zwischen den beiden Vertikalstützen 21, 51 vorhanden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

## Patentansprüche

1. Rohrverbindungsstruktur, umfassend
ein erstes Bauteil (2) mit einem Rohrabschnitt (21), und
ein zweites Bauteil (5) mit einem Rohrabschnitt (51) und einem sich von einem Längsende des Rohrabschnitts (51) erstreckenden Rohrverbinder (7), der im Rohrabschnitt (21) des ersten Bauteils (2) anordbar ist, wobei
der Rohrabschnitt (21) des ersten Bauteils (2) und der Rohrabschnitt (51) des zweiten Bauteils (5) axial aneinander anliegen, wenn der Rohrverbinder (7) des zweiten Bauteils (5) im Rohrabschnitt (21) des ersten Bauteils (2) angeordnet ist,
wobei der Rohrverbinder (7) des zweiten Bauteils (5) mit einem betätigbaren Riegelspannmechanismus ausgestattet ist, **dadurch gekennzeichnet, dass**
der Riegelspannmechanismus des Rohrverbinders (7) des zweiten Bauteils (5) dazu ausgestaltet ist, den Rohrabschnitt (21) des ersten Bauteils (2) und den Rohrabschnitt (51) des zweiten Bauteils (5) miteinander zu verriegeln und zu verspannen, sodass der Rohrabschnitt (21) des ersten Bauteils (2) und der Rohrabschnitt (51) des zweiten Bauteils (5) unter Druck oder Zug verbunden sind, wodurch der Rohrabschnitt (21) des ersten Bauteils (2) und der Rohrabschnitt (51) des zweiten Bauteils (5) so aneinander gepresst beziehungsweise gespannt sind, dass sie im Wesentlichen kein Spiel zueinander aufweisen, wenn der Riegelspannmechanismus betätigt wird, während der Rohrverbinder (7) des zweiten Bauteils (5) im Rohrabschnitt (21) des ersten Bauteils (2) angeordnet ist.

2. Rohrverbindungsstruktur nach Anspruch 1, wobei
der Rohrabschnitt (21) des ersten Bauteils (2) mit einer Nasenöffnung (211) ausgestattet ist,
der Riegelspannmechanismus des Rohrverbinders (7) eine Nase (711) aufweist und
der Riegelspannmechanismus des Rohrverbinders (7) des zweiten Bauteils (5) so ausgestaltet ist, dass die Nase (711) in die Nasenöffnung (211) des Rohrabschnitts (21) des ersten Bauteils (2) bewegt wird und den Rohrabschnitt (21) des ersten Bauteils (2) mit dem Rohrabschnitt (51) des zweiten Bauteils (5) verriegelt, wenn der Riegelspannmechanismus des Rohrverbinders (7) des zweiten Bauteils (5) betätigt wird, während der Rohrverbinder (7) des zweiten Bauteils (5) im Rohrabschnitt (21) des ersten Bauteils (2) angeordnet ist.

3. Rohrverbindungsstruktur nach Anspruch 1 oder 2, wobei der Riegelspannmechanismus des Rohrverbinders (7) des zweiten Bauteils (5) so ausgestaltet ist, dass die Nase (711) an einen Rand der Nasenöffnung (211) des Rohrabschnitts (21) des ersten Bauteils (2) gedrückt wird und den Rohrabschnitt (21) des ersten Bauteils (2) mit dem Rohrabschnitt (51) des zweiten Bauteils (5) verspannt, wenn der Riegelspannmechanismus des Rohrverbinders (7) des zweiten Bauteils (5) betätigt wird, während der Rohrverbinder (7) des zweiten Bauteils (5) im Rohrabschnitt (21) des ersten Bauteils (2) angeordnet ist.

4. Rohrverbindungsstruktur nach Anspruch 2 und 3, wobei der Riegelspannmechanismus des Rohrverbinders (7) des zweiten Bauteils (5) so ausgestaltet ist, dass bei Betätigung des Riegelspannmechanismus, während der Rohrverbinder (7) des zweiten Bauteils (5) im Rohrabschnitt (21) des ersten Bauteils (2) angeordnet ist, zuerst zum Verriegeln des Rohrabschnitts (21) des ersten Bauteils (2) mit dem Rohrabschnitt (51) des zweiten Bauteils (5) die Nase (711) in die Nasenöffnung (211) des Rohrabschnitts (21) des ersten Bauteils (2) bewegt wird und nachfolgend zum Verspannen des Rohrabschnitts (21) des ersten Bauteils (2) mit dem Rohrabschnitt (51) des zweiten Bauteils (5) die Nase (711) des Riegelspannmechanismus des Rohrverbinders (7) des zweiten Bauteils (5) an den Rand der Nasenöffnung (211) des Rohrabschnitts (21) des ersten Bauteils (2) gedrückt wird.

5. Rohrverbindungsstruktur nach einem der Ansprüche 2 bis 4, wobei der Riegelspannmechanismus des Rohrverbinders (7) des zweiten Bauteils (5) so ausgestaltet ist, dass zum Verriegeln des Rohrabschnitts (21) des ersten Bauteils (2) mit dem Rohrabschnitt (51) des zweiten Bauteils (5) die Nase (711) quasi radial bewegbar ist.

6. Rohrverbindungsstruktur nach Anspruch 5, wobei der Riegelspannmechanismus des Rohrverbinders (7) des zweiten Bauteils (5) eine ortsfest mit dem Rohrabschnitt (51) des zweiten Bauteils (5) verbundene Basis (72) und ein an der Basis (72) schwenkbar gelagertes Stellglied (71), an dem die Nase (711) ausgebildet ist, umfasst.

7. Rohrverbindungsstruktur nach einem der Ansprüche 3 bis 6, wobei der Riegelspannmechanismus des Rohrverbinders (7) des zweiten Bauteils (5) so ausgestaltet ist, dass zum Verspannen des Rohrabschnitts (21) des ersten Bauteils (2) mit dem Rohrabschnitt (51) des zweiten Bauteils (5) die Nase (711) quasi axial bewegbar ist.

8. Rohrverbindungsstruktur nach Anspruch 6 und 7, wobei das Stellglied (71) des Riegelspannmechanismus des Rohrverbinders (7) des zweiten Bauteils (5) axial bewegbar an der Basis (72) des Rohrverbinders (7) des zweiten Bauteils (5) gelagert ist.

9. Rohrverbindungsstruktur nach Anspruch 8, wobei das Stellglied (71) des Riegelspannmechanismus des Rohrverbinders (7) des zweiten Bauteils (5) eine längsförmige Bolzenaufnahme (712) aufweist und die Basis (72) des Rohrverbinders (7) des zweiten Bauteils (5) einen Bolzen (73), der in die Bolzenaufnahme (712) hineinragt.

10. Rohrverbindungsstruktur nach einem der Ansprüche 2 bis 9, wobei der Riegelspannmechanismus des Rohrverbinders (7) des zweiten Bauteils (5) eine Betätigungsschraube (74) umfasst, die so an die Nase (711) des Riegelspannmechanismus des Rohrverbinders (7) des zweiten Bauteils (5) gekoppelt ist, dass sich die Nase (711) bei einem Drehen der Betätigungsschraube (74) bewegt.

11. Rohrverbindungsstruktur nach Anspruch 9 und 10, wobei das Stellglied (71) des Riegelspannmechanismus des Rohrverbinders (7) des zweiten Bauteils (5) eine durchgehende Schraubenaufnahme (713) aufweist, in die die Betätigungsschraube (74) eingedreht ist.

12. Rohrverbindungsstruktur nach Anspruch 10 oder 11, wobei der Rohrabschnitt des ersten Bauteils (2) mit einer Betätigungsöffnung (212) ausgestattet ist, durch die ein Schraubendreher so einführbar ist, dass er in die Betätigungsschraube (74) greift, wenn der Rohrverbinder (7) des zweiten Bauteils (5) im Rohrabschnitt (21) des ersten Bauteils (2) angeordnet ist.

13. Rohrverbindungsstruktur nach einem der vorangehenden Ansprüche, wobei der Riegelspannmechanismus des Rohrverbinders (7) des zweiten Bauteils (5) ein Federelement (75) umfasst, das den Riegelspannmechanismus in eine Ausgangsstellung bewegt, wenn der Riegelspannmechanismus nicht betätigt wird.

14. Möbelbausatz (1) mit
einem Satz Bodenleitern (2), die jeweils zwei über eine obere Sprosse (22) und eine untere Sprosse (22) miteinander verbundene Vertikalstützen (21) umfassen, wobei die zwei Vertikalstützen (21) jeweils mit einem Fuss (23) zum Aufstellen auf einen Boden ausgestattet sind,
einem Satz Aufbauleitern (5), die jeweils zwei über eine obere Sprosse (51) miteinander verbundene Vertikalstützen (51) aufweisen, wobei die Vertikalstützen (51) dazu ausgebildet sind, auf die Vertikalstützen (51) einer anderen der Aufbauleitern (5) oder die Vertikalstützen (21) einer der Bodenleitern (2) aufgesteckt zu werden, wobei
die einen der Bodenleitern (2) und der Aufbauleitern (5) jeweils als erstes Bauteil (2) einer Rohrverbindungsstruktur nach einem der vorangehenden Ansprüche und die anderen der Bodenleitern (2) und der Aufbauleitern (5) jeweils als zweites Bauteil (5) der Rohrverbindungsstruktur ausgebildet sind.

15. Möbelbausatz (1) nach Anspruch 14, umfassend
einen Satz längsförmiger Traversen (3), die jeweils an ihren Längsenden mit einer Einrastklaue (32) ausgestattet sind, die dazu ausgebildet ist, werkzeuglos an einer der Sprossen (22) einer der Bodenleitern (2) montiert zu werden, und
einen Satz längsförmiger Windverbände (4), die jeweils an ihren Längsenden mit einer Schelle (42) ausgestattet sind, die dazu ausgebildet ist, an einer der Sprossen (22) einer der Bodenleitern (2) montiert zu werden, indem sie die eine der Sprossen (22) umgreift, wobei
die Traversen und die Windverbände (4) so ausgebildet sind, dass eine der Traversen (3) an der oberen Sprosse (22) einer ersten der Bodenleitern (2) und an der oberen Sprosse (22) einer zweiten der Bodenleitern (2) montierbar ist, während einer der Windverbände (4) an der oberen der ersten der Bodenleitern (2) und der unteren der zweiten der Bodenleitern (2) montiert ist.

## Claims

1. A pipe connecting structure, comprising
a first component (2) having a pipe portion (21), and
a second component (5) having a pipe portion (51) and a pipe connector (7) which extends from a longitudinal end of the pipe portion (51) and is arrangeable in the pipe portion (21) of the first component (2),
wherein the pipe portion (21) of the first component (2) and the pipe portion (51) of the second component (5) lie axially against each other when the pipe connector (7) of the second component (5) is arranged in the pipe portion (21) of the first component (2),
wherein the pipe connector (7) of the second component (5) is equipped with an actuatable locking-clamping-mechanism, **characterized in that**
the locking-clamping-mechanism of the pipe connector (7) of the second component (5) is configured to lock and clamp the pipe portion (21) of the first component (2) and the pipe portion (51) of the second component (5) together, such that the pipe portion (21) of the first component (2) and the pipe portion (51) of the second component (5) are connected under compression or tension, whereby the pipe portion (21) of the first component (2) and the pipe portion (51) of the second component (5) are pressed or clamped against one another in such a manner that they have substantially no play relative to one another when the locking-clamping-mechanism is actuated, while the pipe connector (7) of the second component (5) is arranged in the pipe portion (21) of the first component (2).

2. The pipe connecting structure according to claim 1, wherein
the pipe portion (21) of the first component (2) is equipped with a lug opening (211),
the locking-clamping-mechanism of the pipe connector (7) has a lug (711), and
the locking-clamping-mechanism of the pipe connector (7) of the second component (5) is configured such that the lug (711) is moved into the lug opening (211) of the pipe portion (21) of the first component (2) and the pipe portion (21) of the first component (2) is locked to the pipe portion (51) of the second component (5) when the locking-clamping-mechanism of the pipe connector (7) of the second component (5) is actuated while the pipe connector (7) of the second component (5) is arranged in the pipe portion (21) of the first component (2).

3. The pipe connecting structure according to claim 1 or 2, wherein the locking-clamping-mechanism of the pipe connector (7) of the second component (5) is configured in such a manner that the lug (711) is pressed against an edge of the lug opening (211) of the pipe portion (21) of the first component (2) and clamps the pipe portion (21) of the first component (2) to the pipe portion (51) of the second component (5), when the locking-clamping-mechanism of the pipe connector (7) of the second component (5) is actuated while the pipe connector (7) of the second component (5) is arranged in the pipe portion (21) of the first component (2).

4. The pipe connecting structure according to claim 2 and 3, wherein the locking-clamping-mechanism of the pipe connector (7) of the second component (5) is configured in such a manner that upon actuation of the locking-clamping-mechanism, while the pipe connector (7) of the second component (5) is arranged in the pipe portion (21) of the first component (2), firstly, the nose (711) is moved into the nose opening (211) of the pipe portion (21) of the first component (2) in order to lock the pipe portion (21) of the first component (2) to the pipe portion (51) of the second component (5), and, subsequently, in order to clamp the pipe portion (21) of the first component (2) to the pipe section (51) of the second component (5), the nose (711) of the locking-clamping-mechanism of the pipe connector (7) of the second component (5) is pressed against the edge of the nose opening (211) of the pipe portion (21) of the first component (2).

5. The pipe connecting structure according to any one of claims 2 to 4, wherein the locking-clamping-mechanism of the pipe connector (7) of the second component (5) is configured in such a manner that for locking the pipe portion (21) of the first component (2) to the pipe portion (51) of the second component (5), the lug (711) is quasi-radially movable.

6. The pipe connecting structure according to claim 5, wherein the locking-clamping-mechanism of the pipe connector (7) of the second component (5) comprises a base (72) fixedly connected to the pipe portion (51) of the second component (5) and an actuator (71) pivotally mounted on the base (72), on which the lug (711) is formed.

7. The pipe connecting structure according to any one of claims 3 to 6, wherein the locking-clamping-mechanism of the pipe connector (7) of the second component (5) is configured in such a manner that for clamping the pipe portion (21) of the first component (2) with the pipe portion (51) of the second component (5), the lug (711) is quasi-axially movable.

8. The pipe connecting structure according to claim 6 and 7, wherein the actuator (71) of the locking-clamping-mechanism of the pipe connector (7) of the second component (5) is axially movably supported on the base (72) of the pipe connector (7) of the second component (5).

9. The pipe connecting structure according to claim 8, wherein the actuator (71) of the locking-clamping-mechanism of the pipe connector (7) of the second component (5) comprises an elongated bolt receptacle (712) and the base (72) of the pipe connector (7) of the second component (5) comprises a bolt (73) projecting into the bolt receptacle (712).

10. The pipe connecting structure according to any one of claims 2 to 9, wherein the locking-clamping-mechanism of the pipe connector (7) of the second component (5) comprises an actuating screw (74) coupled to the nose (711) of the locking-clamping-mechanism of the pipe connector (7) of the second component (5) in such a manner that the nose (711) moves when the actuating screw (74) is turned.

11. The pipe connecting structure according to claim 9 and 10, wherein the actuator (71) of the locking-clamping-mechanism of the pipe connector (7) of the second component (5) has a continuous screw receptacle (713) into which the actuating screw (74) is screwed.

12. The pipe connecting structure according to claim 10 or 11, wherein the pipe portion of the first component (2) is provided with an actuating opening (212) through which a screwdriver can be inserted in such a manner that it engages the actuating screw (74) when the pipe connector (7) of the second component (5) is arranged in the pipe portion (21) of the first component (2).

13. The pipe connecting structure according to any one of the preceding claims, wherein the locking-clamping-mechanism of the pipe connector (7) of the second component (5) comprises a spring element (75) that moves the locking-clamping-mechanism to an initial position when the locking-clamping-mechanism is not actuated.

14. A furniture kit (1) having
a set of floor ladders (2), each comprising two vertical supports (21) connected to one another via an upper rung (22) and a lower rung (22), wherein the two vertical supports (21) are in each case equipped with a foot (23) for positioning on a floor,
a set of construction ladders (5), each of which has two vertical supports (51) connected to one another via an upper rung (51), the vertical supports (51) being configured to be attached to the vertical supports (51) of another of the construction ladders (5) or to the vertical supports (21) of one of the base ladders (2), wherein
one of the base ladders (2) and the construction ladders (5) is in each case designed as a first component (2) of a pipe connecting structure according to any one of the preceding claims, and the other of the base ladders (2) and the construction ladders (5) is in each case designed as a second component (5) of the pipe connecting structure.

15. The furniture kit (1) according to claim 14, comprising
a set of elongate cross-members (3) which are each equipped at the longitudinal ends thereof with a snap-on claw (32) which is designed to be mounted without tools on one of the rungs (22) of one of the base ladders (2), and
a set of elongate sway braces (4) which are each equipped at the longitudinal ends thereof with a clamp (42) which is designed to be mounted on one of the rungs (22) of one of the base ladders (2) by engaging around one of the rungs (22), wherein
the cross-members and the sway braces (4) are designed in such a manner that one of the cross-members (3) can be mounted on the upper rung (22) of a first of the floor ladders (2) and on the upper rung (22) of a second of the floor ladders (2), while one of the sway braces (4) is mounted on the upper of the first of the floor ladders (2) and on the lower of the second of the floor ladders (2).

## Revendications

1. Structure de raccordement de tuyaux, comprenant
un premier composant (2) comportant une section formant tuyau (21), et
un second composant (5) comportant une section formant tuyau (51) et un raccord de tuyau (7) s'étendant depuis une extrémité longitudinale de la section formant tuyau (51), lequel raccord de tuyau peut être disposé dans la section formant tuyau (21) du premier composant (2), dans laquelle
la section formant tuyau (21) du premier composant (2) et la section formant tuyau (51) du second composant (5) reposent axialement l'une à côté de l'autre lorsque le raccord de tuyau (7) du second composant (5) est disposé dans la section formant tuyau (21) du premier composant (2),
dans laquelle
le raccord de tuyau (7) du second composant (5) est pourvu d'un mécanisme de serrage et de verrouillage actionnable, **caractérisée en ce que**
le mécanisme de serrage et de verrouillage du raccord de tuyau (7) du second composant (5) est conçu pour verrouiller et serrer la section formant tuyau (21) du premier composant (2) et la section formant tuyau (51) du second composant (5) l'une avec l'autre, de sorte que la section formant tuyau (21) du premier composant (2) et la section formant tuyau (51) du second composant (5) sont reliées sous pression ou traction, moyennant quoi la section formant tuyau (21) du premier composant (2) et la section formant tuyau (51) du second composant (5) sont pressées ou serrées l'une contre l'autre de sorte qu'elles ne présentent sensiblement aucun jeu l'une par rapport à l'autre lorsque le mécanisme de serrage et de verrouillage est actionné, tandis que le raccord de tuyau (7) du second composant (5) est disposé dans la section formant tuyau (21) du premier composant (2).

2. Structure de raccordement de tuyaux selon la revendication 1, dans laquelle
la section formant tuyau (21) du premier composant (2) est pourvue d'une ouverture pour nez (211),
le mécanisme de serrage et de verrouillage du raccord de tuyau (7) présente un nez (711) et
le mécanisme de serrage et de verrouillage du raccord de tuyau (7) du second composant (5) est conçu de sorte que le nez (711) est déplacé dans l'ouverture pour nez (211) de la section formant tuyau (21) du premier composant (2) et verrouille la section formant tuyau (21) du premier composant (2) avec la section formant tuyau (51) du second composant (5) lorsque le mécanisme de serrage et de verrouillage du raccord de tuyau (7) du second composant (5) est actionné, tandis que le raccord de tuyau (7) du second composant (5) est disposé dans la section formant tuyau (21) du premier composant (2).

3. Structure de raccordement de tuyaux selon la revendication 1 ou 2, dans laquelle le mécanisme de serrage et de verrouillage du raccord de tuyau (7) du second composant (5) est conçu de sorte que le nez (711) est pressé contre un bord de l'ouverture pour nez (211) de la section formant tuyau (21) du premier composant (2) et serre la section formant tuyau (21) du premier composant (2) avec la section formant tuyau (51) du second composant (5) lorsque le mécanisme de serrage et de verrouillage du raccord de tuyau (7) du second composant (5) est actionné, tandis que le raccord de tuyau (7) du second composant (5) est disposé dans la section formant tuyau (21) du premier composant (2).

4. Structure de raccordement de tuyaux selon les revendications 2 et 3, dans laquelle le mécanisme de serrage et de verrouillage du raccord de tuyau (7) du second composant (5) est conçu de sorte que, lors de l'actionnement du mécanisme de serrage et de verrouillage, tandis que le raccord de tuyau (7) du second composant (5) est disposé dans la section formant tuyau (21) du premier composant (2), tout d'abord, pour verrouiller la section formant tuyau (21) du premier composant (2) avec la section formant tuyau (51) du second composant (5), le nez (711) est déplacé dans l'ouverture pour nez (211) de la section formant tuyau (21) du premier composant (2), et ensuite, pour serrer la section formant tuyau (21) du premier composant (2) avec la section formant tuyau (51) du second composant (5), le nez (711) du mécanisme de serrage et de verrouillage du raccord de tuyau (7) du second composant (5) est pressé contre le bord de l'ouverture pour nez (211) de la section formant tuyau (21) du premier composant (2).

5. Structure de raccordement de tuyaux selon l'une des revendications 2 à 4, dans laquelle le mécanisme de serrage et de verrouillage du raccord de tuyau (7) du second composant (5) est conçu de sorte que, pour verrouiller la section formant tuyau (21) du premier composant (2) avec la section formant tuyau (51) du second composant (5), le nez (711) peut être déplacé quasi radialement.

6. Structure de raccordement de tuyaux selon la revendication 5, dans laquelle le mécanisme de serrage et de verrouillage du raccord de tuyau (7) du second composant (5) comprend une base (72) reliée de manière fixe à la section formant tuyau (51) du second composant (5) et un actionneur (71) monté de manière à pouvoir pivoter sur la base (72) et au niveau duquel est réalisé le nez (711).

7. Structure de raccordement de tuyaux selon l'une des revendications 3 à 6, dans laquelle le mécanisme de serrage et de verrouillage du raccord de tuyau (7) du second composant (5) est conçu de sorte que, pour serrer la section formant tuyau (21) du premier composant (2) avec la section formant tuyau (51) du second composant (5), le nez (711) peut être déplacé quasi axialement.

8. Structure de raccordement de tuyaux selon les revendications 6 et 7, dans laquelle l'actionneur (71) du mécanisme de serrage et de verrouillage du raccord de tuyau (7) du second composant (5) est monté de manière à pouvoir être déplacé axialement sur la base (72) du raccord de tuyau (7) du second composant (5).

9. Structure de raccordement de tuyaux selon la revendication 8, dans laquelle l'actionneur (71) du mécanisme de serrage et de verrouillage du raccord de tuyau (7) du second composant (5) présente un logement pour boulon (712) allongé et la base (72) du raccord de tuyau (7) du second composant (5) présente un boulon (73) qui fait saillie dans le logement pour boulon (712).

10. Structure de raccordement de tuyaux selon l'une des revendications 2 à 9, dans laquelle le mécanisme de serrage et de verrouillage du raccord de tuyau (7) du second composant (5) comprend une vis d'actionnement (74) qui est accouplée au nez (711) du mécanisme de serrage et de verrouillage du raccord de tuyau (7) du second composant (5) de sorte que le nez (711) se déplace lors d'une rotation de la vis d'actionnement (74).

11. Structure de raccordement de tuyaux selon les revendications 9 et 10, dans laquelle l'actionneur (71) du mécanisme de serrage et de verrouillage du raccord de tuyau (7) du second composant (5) présente un logement pour vis traversant (713) dans lequel la vis d'actionnement (74) est vissée.

12. Structure de raccordement de tuyaux selon la revendication 10 ou 11, dans laquelle la section formant tuyau du premier composant (2) est pourvue d'une ouverture d'actionnement (212) à travers laquelle un tournevis peut être inséré de sorte qu'il vient en prise dans la vis d'actionnement (74) lorsque le raccord de tuyau (7) du second composant (5) est disposé dans la section formant tuyau (21) du premier composant (2).

13. Structure de raccordement de tuyaux selon l'une des revendications précédentes, dans laquelle le mécanisme de serrage et de verrouillage du raccord de tuyau (7) du second composant (5) comprend un élément formant ressort (75) qui déplace le mécanisme de serrage et de verrouillage dans une position initiale lorsque le mécanisme de serrage et de verrouillage n'est pas actionné.

14. Meuble en kit (1) comportant
un jeu d'échelles pour plancher (2) qui comprennent respectivement deux supports verticaux (21) reliés entre eux par l'intermédiaire d'un barreau supérieur (22) et d'un barreau inférieur (22), dans lequel les deux supports verticaux (21) sont respectivement pourvus d'un pied (23) pour le positionnement sur un plancher,
un jeu d'échelles de construction (5) qui présentent respectivement deux supports verticaux (51) reliés l'un à l'autre par l'intermédiaire d'un barreau supérieur (51), dans lequel les supports verticaux (51) sont réalisés pour être emboîtés sur les supports verticaux (51) d'une autre échelle de construction parmi les échelles de construction (5) ou sur les supports verticaux (21) de l'une des échelles pour plancher (2), dans lequel
l'une des échelles pour plancher (2) et l'une des échelles de construction (5) sont réalisées respectivement en tant que premier composant (2) d'une structure de raccordement de tuyaux selon l'une des revendications précédentes et l'autre des échelles pour plancher (2) et l'autre des échelles de construction (5) sont réalisées respectivement en tant que second composant (5) de la structure de raccordement de tuyaux.

15. Meuble en kit (1) selon la revendication 14, dans lequel
un jeu de traverses (3) allongées qui sont respectivement pourvues d'une griffe d'encliquetage (32) à leurs extrémités longitudinales, laquelle griffe d'encliquetage est réalisée pour être montée sans outil sur l'un des barreaux (22) de l'une des échelles pour plancher (2), et
un jeu de contreventements (4) allongés qui sont respectivement pourvus d'un collier de serrage (42) à leurs extrémités longitudinales, lequel collier de serrage est réalisé pour être monté sur l'un des barreaux (22) de l'une des échelles pour plancher (2) en entourant le barreau (22), dans lequel
les traverses et les contreventements (4) sont réalisés de sorte que l'une des traverses (3) peut être montée sur le barreau supérieur (22) d'une première échelle pour plancher parmi les échelles pour plancher (2) et sur le barreau supérieur (22) d'une seconde échelle pour plancher parmi les échelles pour plancher (2), tandis que l'un des contreventements (4) est monté sur le supérieur de la première échelle pour plancher parmi les échelles pour plancher (2) et sur l'inférieur de la seconde échelle pour plancher parmi les échelles pour plancher (2).
